# EUROPÄISCHE PATENTSCHRIFT

(11) **EP 2 960 086 B1**
(45) Veröffentlichungstag und Bekanntmachung des Hinweises auf die Patenterteilung: **25.05.2016**
(21) Anmeldenummer: 15168325.7
(22) Anmeldetag: 20.05.2015
(51) Int. Cl.: B60G 3/20, B60G 7/00, B60B 35/00, B60G 11/16

(54) **RADAUFHÄNGUNG**
WHEEL SUSPENSION
SUSPENSION DE ROUE

(30) Priorität: 27.06.2014 DE 102014109038
(43) Veröffentlichungstag der Anmeldung: 30.12.2015
(73) Patentinhaber: Benteler Automobiltechnik GmbH, 33102 Paderborn (DE)
(72) Erfinder: Czerr, Siegmund, 33659 Bielefeld (DE); Meyer, Stephan, 33605 Bielefeld (DE)
(74) Vertreter: Griepenstroh, Jörg

(56) Entgegenhaltungen:
- EP-A2- 1 216 858
- WO-A1-2011/023871
- CN-U- 202 378 655
- DE-A1-102011 112 057
- FR-A1- 2 813 239
- JP-A- H0 986 126
- JP-A- 2002 316 228
- JP-A- 2014 004 953
- KR-A- 20030 024 378
- KR-A- 20100 045 789
- KR-A- 20130 067 446
- US-A- 3 292 944
- US-A- 6 138 357
- US-A1- 2013 147 144

## Beschreibung

Die Erfindung betrifft eine Radaufhängung für ein Kraftfahrzeug mit einem Radträger gemäß den Merkmalen im Oberbegriff von Anspruch 1.

Die Radaufhängung ist Bestandteil des Fahrwerks eines Kraftfahrzeugs und bildet die kinematische Koppelung mit dem Kraftfahrzeugrad, so dass das Rad gegenüber der Kraftfahrzeugkarosserie relativ beweglich ist und ein- bzw. ausfedern kann. Als Radträger bezeichnet man die Teile des Fahrwerks eines Kraftfahrzeugs, auf denen die Räder über das Radlager gelagert sind. Das Rad ist auf einem Radträger drehbar gelagert und der Radträger als Koppelglied der kinematischen Kette durch mehrere Lenker einzeln mit dem Aufbau verbunden.

Es ist bekannt, Radträger als Guss- oder Schmiedeteile auszubilden. Derartige Radträger sind stabil und können maschinell sehr gut bearbeitet werden, um sie mit Bohrungen für Lenkeranschlüsse und ähnliches zu versehen. Diese Radträger sind jedoch relativ schwer, was sich sowohl auf den Kraftstoffverbrauch als auch auf das Federverhalten nachteilig auswirken kann.

Durch die DE 10 2010 027 752 A1 zählt ein Radträger zum Stand der Technik, der zumindest überwiegend als Guss- oder Schmiedekörper ausgebildet ist.

Die DE 103 46 280 A1 offenbart einen Radträger, der ebenfalls als Schmiedeteil oder Gussteil ausführt ist. Lenkeranbindungsstellen sind durch ein integral mit dem Radträger ausgeführte Verstrebung überbrückt. Durch die Verstrebung wird eine Versteifung des Radträgers erzielt, so dass der Radträger auch Leichtmetall gefertigt werden kann, wodurch Gewicht eingespart wird.

Bekannt sind auch gebaute Radträger aus mehreren miteinander verschweißten schalenförmigen Bauteilen.

Durch die DE 295 19 965 U1 zählt ein Kraftfahrzeug-Radträger für Mehrlenkerachsen zum Stand der Technik. Der Radträger ist ein aus einer Innenschale und einer Außenschale gebildeter Hohlkörper, wobei die Innenschale und die Außenschale im Bereich der Radbefestigung aufeinander liegen und durch Schweißung miteinander verbunden sind. An die Außenschale sind Querlenkeranschlüsse angeformt, wobei die Querlenkeranschlüsse der Außenschale die Querlenker U-förmig umfassen.

Die DE 10 2011 007 831 A1 beschreibt eine radtragende Baueinheit, die einen ein Radlager abstützenden Radträgerbereich und einen Flanschbereich aufweist, über den die Baueinheit mittelbar oder unmittelbar an ein Federbein oder ähnliches zur Federung und/oder Dämpfung ausgelegtes Element anbindbar ist. Die Baueinheit umfasst einen umgeformten, einteiligen Blechkörper, von dem der Radträgerbereich und der Flanschbereich einstückige Bestandteile sind.

Aus der DE 10 2004 021 884 A1 geht ein Radträger für ein Kraftfahrzeug hervor mit einem ersten und einem zweiten schalenförmigen Bauteil, die miteinander verbunden sind und zwischen sich einen Hohlraum bilden und Lagerungen für Radführungslenker und ein Federbein aufweisen. Die schalenförmigen Bauteile sind randseitig über Bördelungen miteinander verbunden. Über innenliegende Abstützungen im Bereich der Lagerungen werden Verformungen der Bauteile vermieden.

Auch der aus der DE 199 31 018 A1 bekannte Radträger ist aus zwei schalenförmigen Bauteilen gebildet. Diese sind durch Schweißung miteinander verbunden und schließen einen Hohlraum ein. Innerhalb des Hohlraums ist ein Abstandselement vorgesehen, welches als Distanzhülse ausgebildet ist.

Bei gebauten Radträgern aus Stahlblech ist die Schnittstelle zwischen dem Radträger und den Lenkern, insbesondere Federlenkern bzw. Querlenkern, wegen der komplexen Geometrie und Bauraumvorgaben nicht immer einfach zu realisieren. Zum elastischen Anbinden der Lenker an dem Radträger wird im Lenkeranschluss ein Lager, insbesondere ein Gummilager, eingesetzt.

Der Erfindung liegt ausgehend vom Stand der Technik die Aufgabe zugrunde, einen hinsichtlich des Bauraums und der Steifigkeitseigenschaften verbesserten Radträger zu schaffen, der eine kostengünstige und leichte Anbindung zwischen Radträger und Lenker, insbesondere zum Federlenker ermöglicht.

Die Lösung dieser Aufgabe besteht nach der Erfindung in einer Radaufhängung für ein Kraftfahrzeug mit einem Radträger gemäß den Merkmalen von Anspruch 1.

Vorteilhafte Ausgestaltungen und Weiterbildungen der erfindungsgemäßen Radaufhängung sind Gegenstand der abhängigen Ansprüche 2 bis 9.

Die Radaufhängung weist einen Radträger und mehrere Lenker auf, welche jeweils über einen Lenkeranschluss mit dem Radträger verbunden sind. Der Radträger umfasst einen Schalenkörper aus Blech mit einem Boden und einer Seitenwand. Zumindest ein Lenkeranschluss weist eine in der Seitenwand des Schalenkörpers festgelegte Lageraufnahme auf. In der Lageraufnahme ist ein Lager gehalten, wobei der an diesem Lenkeranschluss befestigte Lenker die Lageraufnahme umgreift.

Die Erfindung zeichnet sich durch den geringen notwendigen Bauraum an der Schnittstelle zwischen Radträger und Lenker, insbesondere dem Federlenker aus. Der Radträger besitzt eine hohe Steifigkeit bei geringem Bauraum. Auch die Werkzeugkosten sind gegenüber den bekannten Radträger geringer.

Ein wesentlicher Aspekt und Vorteil der Erfindung besteht weiterhin darin, dass unterschiedliche Spurweiten in der Radaufhängung am Radträger leicht realisierbar sind. Dies erfolgt über die Position des Lenkeranschlusses in der Seitenwand des Schalenkörpers. Teure Zusatzwerkzeuge sind hierfür nicht erforderlich. Vorteilhaft ist insbesondere, dass der Federlenker nicht geändert zu werden braucht. Dies ist vor allem dann von Vorteil, wenn innerhalb einer Fahrzeugserie für unterschiedliche Fahrzeugmodelle auf der gleichen Plattform wegen unterschiedlichen Designschwerpunkten entweder Radträger aus Stahlblech oder aus Guss vorgesehen sind. Unabhängig ob der Radträger ein Blechbauteil gemäß der Erfindung oder ein Gussbauteil ist, kann der Federlenker unverändert bleiben.

Innerhalb der kinematischen Kette werden die Kräfte zwischen dem Radträger und den Lenkern weitergeleitet und übertragen. Der Radträger realisiert die elastokinetischen Vorgaben unter Berücksichtigung der geringen Bauraumvorgaben, die in der Regel abhängig sind vom Felgendurchmesser und besitzt zudem eine hohe Steifigkeit.

Ein wesentlicher Aspekt und Vorteil der Erfindung ist, dass das Lager in der Seitenwand des Radträgers aufgenommen ist.

Ein Aspekt der Erfindung sieht vor, dass die Lageraufnahme eine Hülse ist. Bei einer anderen Ausführungsform der Erfindung ist die Lageraufnahme durch einen Durchzug in der Seitenwand des Schalenkörpers gebildet. Das Lager ist ein Gummilager. Das Gummilager ist bevorzugt in die Lageraufnahme eingepresst.

Die Lageraufnahme bzw. die Hülse ist in einer Öffnung in der Seitenwand festgelegt. Die Festlegung erfolgt durch stoffschlüssige Fügung, insbesondere Schweißen oder Löten. Die Lageraufnahme kann auch, wie bereits ausgeführt, durch einen in der Seitenwand des Schalenkörpers vorgesehenen Durchzug ausgebildet sein. Grundsätzlich ist es auch möglich, eine Lageraufnahme in Form einer Hülse in einem Durchzug in der Seitenwand des Schalenkörpers abzustützen. Hierdurch wird das Steifigkeitsverhalten zusätzlich verbessert.

Um die Befestigung der Lageraufnahme in der Seitenwand zusätzlich zu stabilisieren, kann der Lenkeranschluss parallel zur Seitenwand eine Stützwand aufweisen. Die Lageraufnahme ist zusätzlich mit einem Ende in der Stützwand gehalten. Bevorzugt ist die Seitenwand mit dem Schalenkörper verschweißt.

Eine vorteilhafte Ausführungsform sieht vor, dass der Schalenkörper durch ein Deckelblech bereichsweise verschlossen ist. Hierdurch wird der Radträger versteift. Das Deckelblech ist stirnseitig der Seitenwand des Schalenkörpers mit dieser stoffschlüssig gefügt.

Zur kompakten Bauweise des Radträgers trägt die Maßnahme bei, dass das Deckelblech im Bereich der Lenkeranschlüsse Aussparungen aufweist. Insbesondere sind die Aussparungen so ausgestaltet, dass Endabschnitte oder endseitige Schenkel der Lenker durch die Aussparungen hindurchführbar sind zur Anbindung der Enden der Lenker jeweils an einen Lenkeranschluss.

Das Deckelblech kann zur Gewichtsreduzierung und zu Montagezwecken noch eine oder mehrere weitere Aussparungen aufweisen. Diese sind an solchen Stellen des Deckelblechs angeordnet, die im Kraftfluss weniger belastet sind.

Bei dem erfindungsgemäß ausgestalteten Lenkeranschluss umgreift der dort befestigte Lenker die Lageraufnahme. Der Lenker ist endseitig U- oder gabelförmig konfiguriert.

Zusätzlich kann zumindest ein weiterer Lenkeranschluss vorgesehen sein, der zwei von der Seitenwand abstehende Schenkel aufweist, zwischen denen ein Ende eines an diesem Lenkeranschluss befestigten Lenkers mit einem Lager aufgenommen ist.

Ein weiterer Aspekt sieht vor, dass die Radbefestigung außenseitig am Boden des Schalenkörpers gefügt ist. Insbesondere ist die Radbefestigung dort verschweißt.

Der Radträger bzw. der Schalenkörper, das Deckelblech und die Lageraufnahme ebenso wie die Radbefestigung bestehen aus Stahl bzw. einem Stahlwerkstoff.

Die Erfindung ist nachfolgend anhand von in den Zeichnungen dargestellten Ausführungsbeispielen näher beschrieben. Es zeigen:
- Figuren 1 bis 8: eine erfindungsgemäße Radaufhängung in verschiedenen Perspektiven;
- Figur 9: technisch schematisiert einen Ausschnitt aus dem Bereich einer ersten Ausführungsform eines Lenkeranschlusses;
- Figur 10: technisch schematisiert einen Ausschnitt aus dem Bereich einer zweiten Ausführungsform eines Lenkeranschlusses;
- Figur 11: technisch schematisiert einen Ausschnitt aus dem Bereich einer dritten Ausführungsform eines Lenkeranschlusses und
- Figur 12: wiederum schematisiert und technisch stark vereinfacht eine Gegenüberstellung eines Radträgers mit konventionellem Lenkeranschluss und eines Radträgers mit erfindungsgemäßem Lenkeranschluss.

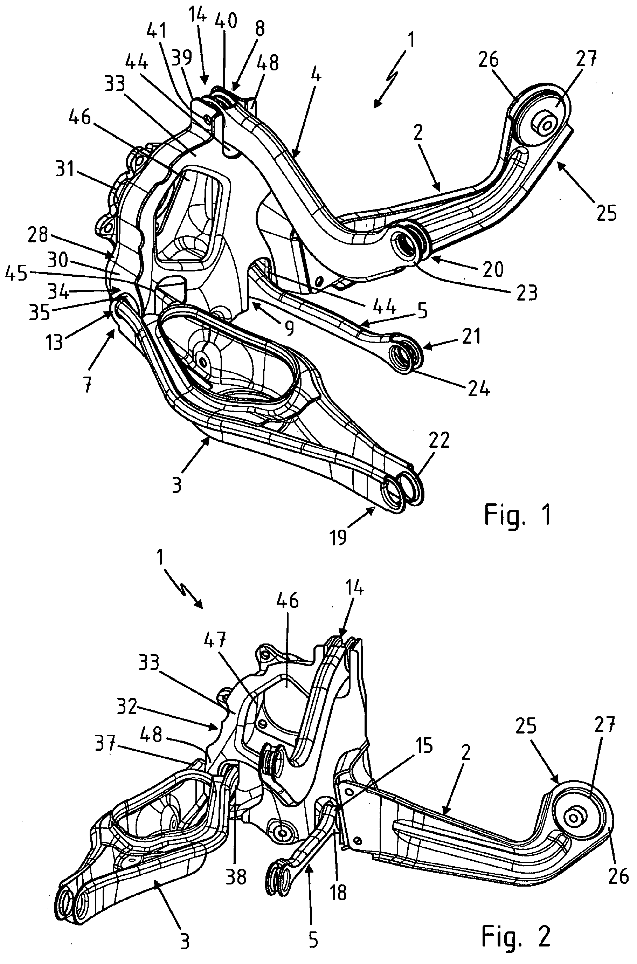

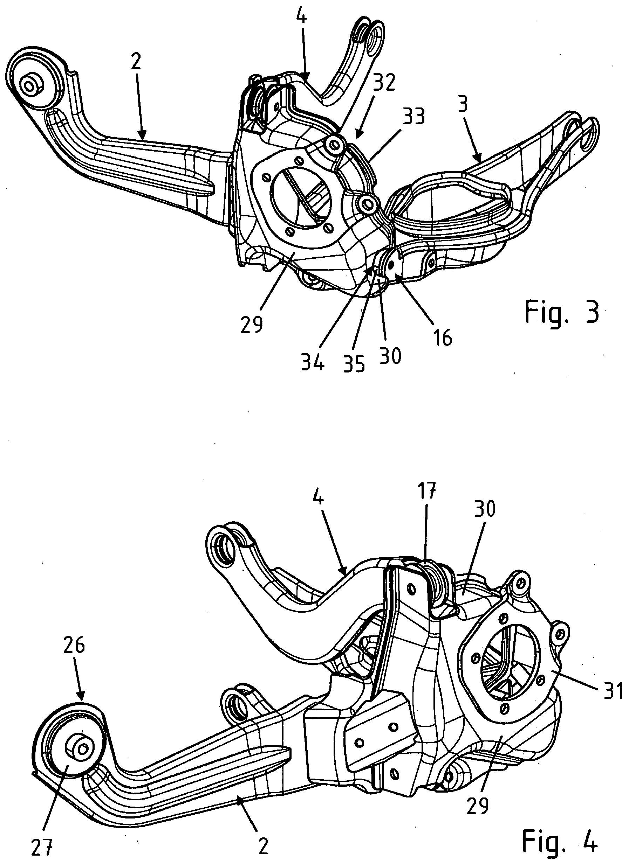

Anhand der Figuren 1 bis 8 ist eine erfindungsgemäße Radaufhängung beschrieben. Die Radaufhängung umfasst einen Radträger 1, an dem Lenker angebunden sind, nämlich ein Längslenker 2 sowie ein Federlenker 3, ein Sturzlenker 4 und ein Spurlenker 5.

Der Längslenker 2 ist über eine Anbindung 6 fest mit dem Radträger 1 verbunden.

Der Federlenker 3 sowie der obere Sturzlenker 4 und der untere Spurlenker 5 sind jeweils über einen Lenkeranschluss 7, 8, 9 und ein Lager 10, 11, 12 drehbar am Radträger 1 angelenkt. In den radträgerseitigen Enden 13, 14, 15 von Federlenker 3, Sturzlenker 4 und Spurlenker 5 sind entsprechende Lageranbindungen 16, 17, 18 ausgebildet. Die vom Radträger 1 abgewandten Enden 19, 20, 21 der Lenker 3, 4, 5 weisen ebenfalls Lageranbindungen 22, 23, 24 auf, um die Lenker 3, 4, 5 am hier nicht dargestellten Fahrgestell befestigen zu können. Auch der Längslenker 2 besitzt an seinem vom Radträger 1 abgewandten Ende 25 eine Lageranbindung 26 mit einem darin aufgenommenen Lager 27.

Der Radträger 1 weist einen äußeren Schalenkörper 28 aus einem tiefgezogenen Stahlblech auf. Der Schalenkörper 28 besitzt einen Boden 29 und eine Seitenwand 30. Außenseitig am Boden 29 des Schalenkörpers 28 ist eine Radbefestigung 31 gefügt. Auf der der Radbefestigung 31 gegenüberliegenden Seite 32 ist am Schalenkörper 28 ein Deckelblech 33 gefügt. Durch das Deckelblech 33 wird der Schalenkörper 28 bereichsweise verschlossen und versteift.

Der Lenkeranschluss 7 für den Federlenker 3 weist eine in der Seitenwand 30 des Schalenkörpers 28 angeordnete Lageraufnahme 34 in Form einer Hülse 35 auf. Die Lageraufnahme 34 ist quer zur Seitenwand 30 gerichtet. In der Seitenwand 30 ist eine Öffnung 36 vorgesehen, in welcher die Hülse 35 festgelegt und schweißtechnisch oder löttechnisch gefügt ist. In der Lageraufnahme 34 ist das Lager 10 gehalten. Bei dem Lager 10 handelt es sich um ein Gummilager. Das Gummilager 10 ist in die Lageraufnahme 34 eingepresst.

Das radträgerseitige Ende 13 des Federlenkers 3 ist U- bzw. gabelförmig konfiguriert. Das Ende 13 weist zwei Schenkel 37, 38 auf, mit denen das Ende 13 die Lageraufnahme 34 umgreift. Hierbei sind die Schenkel 37, 38 jeweils links und rechts der Lageraufnahme 34 positioniert.

Der Lageranschluss 8 des Sturzlenkers 4 weist zwei von der Seitenwand 30 abstehende Schenkel 39, 40 auf. Zwischen den Schenkeln 39, 40 des Lageranschlusses 8 ist das Ende 14 des Sturzlenkers 4 zusammen mit dem Lager 11 aufgenommen. Hierfür sind in den Schenkeln 39, 40 Lagerbohrungen 41 vorgesehen, über welche das Lager 11 mit dem Radträger 1 gekoppelt ist.

Auch der Lenkeranschluss 9 für den Spurlenker 5 umfasst zwei von der Seitenwand 30 abstehende Schenkel 42, 43 auf, zwischen denen das Ende 15 des Spurlenkers 5 mit einem Lager 12 aufgenommen ist.

Das Deckelblech 33 weist im Bereich der Lenkeranschlüsse 8, 9 Aussparungen 44 zur Durchführung der Enden 14, 15 von Sturzlenker 4 und Spurlenker 5 auf. Weiterhin ist eine Aussparung 45 im Deckelblech 33 vorgesehen. Durch die Aussparung 45 greift der Schenkel 38 des Endes 13 des Federlenkers 3 in den Schalenkörper 28. Zusätzlich ist im Deckelblech 33 noch eine Aussparung 46 vorgesehen. Hierdurch wird das Gesamtgewicht des Radträgers 1 verringert. Ferner hat die Aussparung 46 montagetechnische Vorteile und macht den Innenraum 47 des Radträgers 1 zugänglich.

Die Aussparungen 44, 45 werden begrenzt von Wandabschnitten 48, die sich an der Seitenwand 30 und den Schenkeln 39, 40, 42, 43 des Schalenkörpers 28 abstützen und mit diesen gefügt sind.

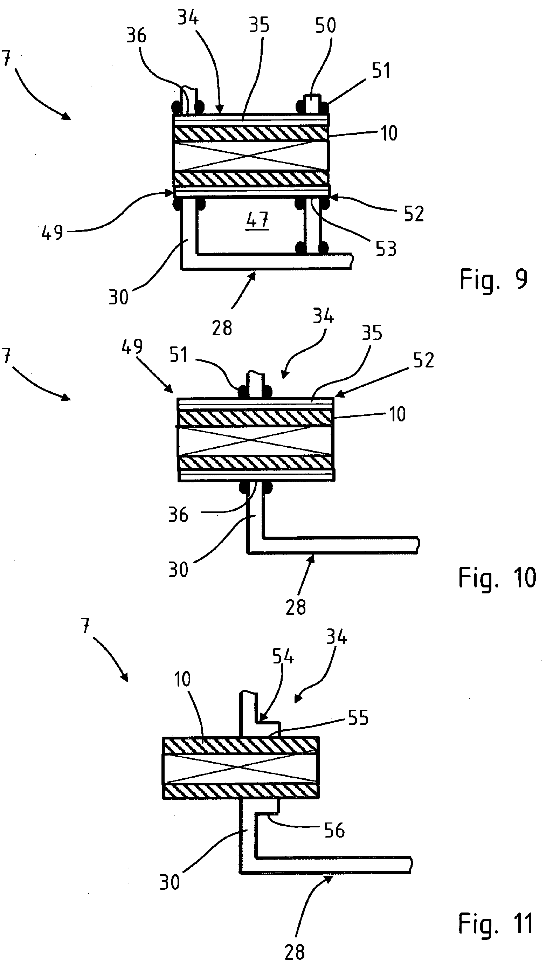

Die Figur 9 zeigt technisch schematisiert einen Ausschnitt aus dem Bereich einer ersten Ausführungsform des Lenkeranschlusses 7 für den Federlenker 3. Die als Lageraufnahme 34 dienende Hülse 35 ist mit einem Ende 49 in einer Öffnung 36 der Seitenwand 30 des Schalenkörpers 28 durch Verschweißung festgelegt. Parallel zur Seitenwand 30 ist im Innenraum 47 eine Stützwand 50 vorgesehen, die ebenfalls mit dem Schalenkörper 28 verschweißt ist. Die schweißtechnische Fügung ist durch die Schweißpunkte 51 verdeutlicht. Die Lageraufnahme 34 ist mit ihrem anderen Ende 52 in einer Öffnung 53 in der Stützwand 50 gehalten und dort ebenfalls schweißtechnisch gefügt. Das Lager 10 ist ein Gummilager, welches in die Hülse 35 eingepresst ist.

Bei der in der Figur 10 dargestellten Ausführungsform ist die Lageraufnahme 34 in Form der Hülse 35 in der Öffnung 36 in der Seitenwand 30 des Schalenkörpers 28 festgelegt und mittels Verschweißung über die Schweißpunkte bzw. -nähte 51 stoffschlüssig fixiert. Die Enden 49, 52 der Hülse 35 stehen zu beiden Seiten gegenüber der Seitenwand 30 vor.

Eine weitere Ausführungsform des Lenkeranschlusses zeigt die Figur 11. Die Lageraufnahme 34 ist durch einen Durchzug 54 in der Seitenwand 30 des Schalenkörpers 28 gebildet. Das Gummilager 10 ist in die Öffnung 55 im Durchzug 54 eingepresst und mittels Presspassung gehalten. Der umlaufende Kragen 56 des Durchzuges 54 stützt das Lager 10 ab.

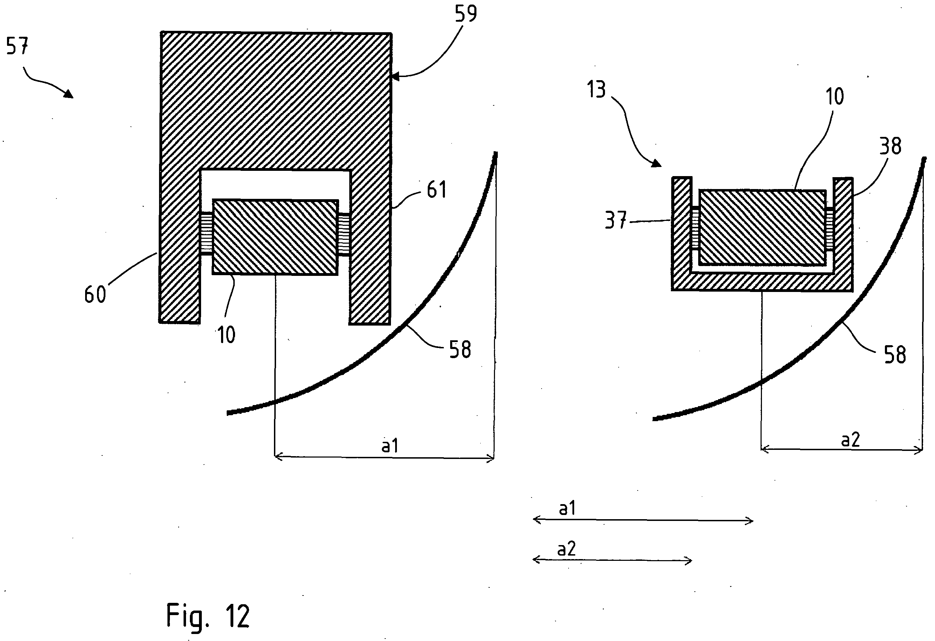

Die Figur 12 verdeutlicht die Bauraumvorteile eines erfindungsgemäß ausgestalteten Lenkeranschlusses 7 für den Federlenker 3 am Radträger 1 gegenüber einer herkömmlichen Anbindung. Ein erfindungsgemäß ausgestalteter Lenkeranschluss 7 für den Federlenker 3 ist in der rechten Bildhälfte dargestellt. Ein konventioneller Lenkeranschluss 57 ist in der linken Bildhälfte dargestellt. Mit 58 ist jeweils die Felge gekennzeichnet.

Konventionell umgreift der Radträger 59 das Ende 7 des Federlenkers 3 mit dem darin integrierten Gummilager 10 U-förmig. Hierfür sind zwei Schenkel 60, 61 am Radträger 59 erforderlich. Dies führt zu geometrischen Einschränkungen, weil die Konstruktion so ausgebildet sein muss, dass der Radträger 59 die Felge 58 nicht berührt. Der Abstand von der Mitte des Lagers 10 zum Außenumfang der Felge 58 ist mit a1 gekennzeichnet.

Bei dem erfindungsgemäßen Lenkeranschluss 7 umgreift das Ende 13 des Federlenkers 3 die Lageraufnahme 34 mit dem darin integrierten Lager 10. Die Schenkel 37, 38 des Federlenkers 3 erstrecken sich jeweils links bzw. rechts der Stirnseiten des Lagers 10. Der Abstand von der Mitte des Lagers 10 bzw. das Ende 7 des Federlenkers 3 zum Außenumfang der Felge 58 beträgt a2. Man erkennt, dass der Abstand a2 kleiner ist als der Abstand a1. Diese Tatsache ermöglicht es, den Federlenker 3 noch weiter nach außen in Fahrzeug-X-Richtung zu verlagern. Zu den geometrischen Bauraumvorteilen trägt auch bei, dass die Schenkel 37, 38 des Federlenkers 3 deutlich dünner ausgeführt sind als die Schenkel 60, 61 am Radträger 59, die aus Steifigkeitsgründen eine bestimmte Dicke haben müssen.

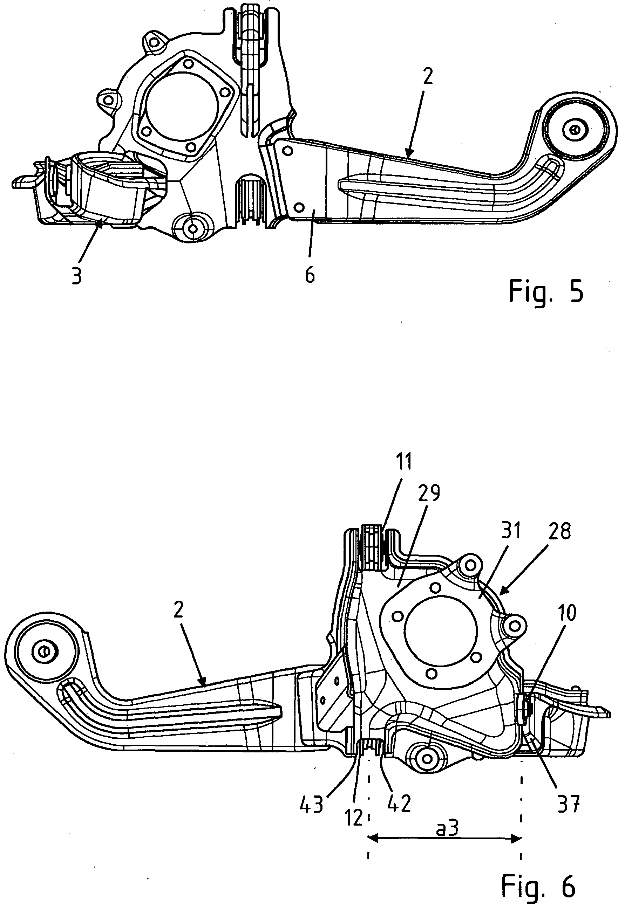

Da der Bauraum an der Schnittstelle zwischen Radträger 1 und Federlenker 3 kompakter wird, kann der Lenkeranschluss 7 weiter in Fahrzeug-X-Richtung nach außen gesetzt werden. In Folge dessen wird auch die Koppellänge a3 (siehe hierzu Figur 6) zwischen dem Federlenker 3 und dem Spurlenker 4 größer und damit auch der Hebel, ohne dass der Radträger 1 die Felge 58 berührt. Hierdurch wird die Steifigkeit des Radträgers 1 erhöht.

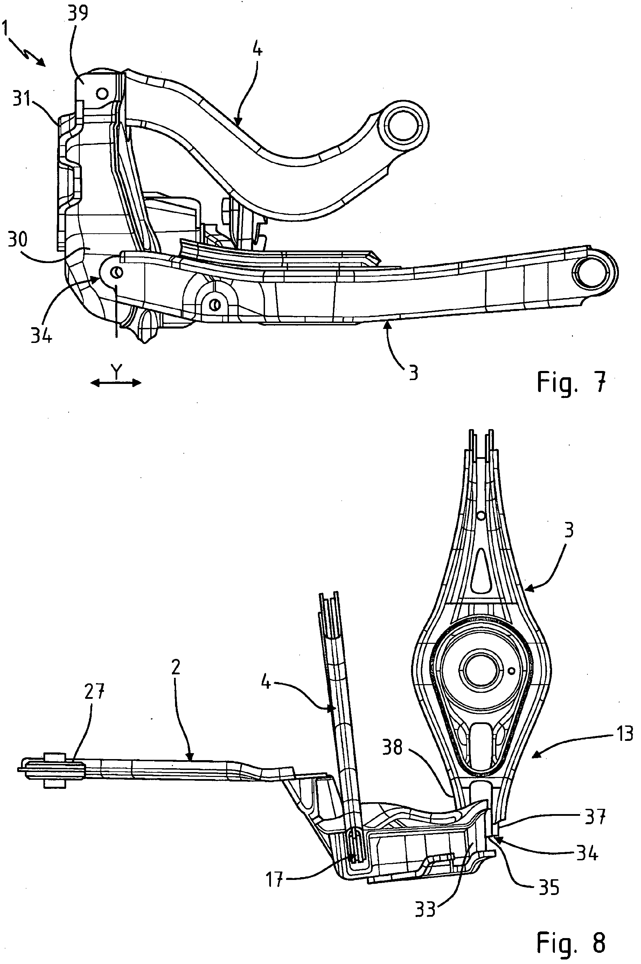

Anhand der Figur 7 wird deutlich, dass auch unterschiedliche Spurweiten leicht einzustellen sind. Dies erfolgt über die Wahl des Anschlusspunktes bzw. die Position der Lageraufnahme 34 in Fahrzeug-Y-Richtung in der Seitenwand 30 des Radträgers 1. Hierfür wird diese Seitenwand 30 an der entsprechenden Stelle gestanzt und mit der für die Aufnahme des Lagers 10 oder der Hülse 35 notwendigen Öffnung 36 bzw. dem Durchzug 54 versehen.

### Bezugszeichen:

- 1 -: Radträger
- 2 -: Längslenker
- 3 -: Federlenker
- 4 -: Sturzlenker
- 5 -: Spurlenker
- 6 -: Anbindung
- 7 -: Lenkeranschluss
- 8 -: Lenkeranschluss
- 9 -: Lenkeranschluss
- 10 -: Lager
- 11 -: Lager
- 12 -: Lager
- 13 -: Ende von 3
- 14 -: Ende von 4
- 15 -: Ende von 5
- 16 -: Lageranbindung
- 17 -: Lageranbindung
- 18 -: Lageranbindung
- 19 -: Ende
- 20 -: Ende
- 21 -: Ende
- 22 -: Lageranbindung
- 23 -: Lageranbindung
- 24 -: Lageranbindung
- 25 -: Ende
- 26 -: Lageranbindung
- 27 -: Lager
- 28 -: Schalenkörper
- 29 -: Boden
- 30 -: Seitenwand
- 31 -: Radbefestigung
- 32 -: Seite
- 33 -: Deckelblech
- 34 -: Lageraufnahme
- 35-: Hülse
- 36 -: Öffnung
- 37 -: Schenkel
- 38 -: Schenkel
- 39 -: Schenkel
- 40 -: Schenkel
- 41 -: Lagerbohrung
- 42 -: Schenkel
- 43 -: Schenkel
- 44 -: Aussparung
- 45 -: Aussparung
- 46 -: Aussparung
- 47 -: Innenraum
- 48 -: Wandabschnitt
- 49 -: Ende
- 50 -: Stützwand
- 51 -: Schweißpunkt
- 52 -: Ende
- 53 -: Öffnung
- 54 -: Durchzug
- 55 -: Öffnung
- 56 -: Kragen
- 57 -: Lenkeranschluss
- 58 -: Felge
- 59 -: Radträger
- 60 -: Schenkel
- 61 -: Schenkel

- a1 -: Abstand
- a2 -: Abstand
- a3 -: Koppellänge

## Patentansprüche

1. Radaufhängung für ein Kraftfahrzeug mit einem Radträger (1) und mehreren Lenkern (3, 4, 5), welche jeweils über einen Lenkeranschluss (7, 8, 9) mit dem Radträger (1) verbunden sind, wobei der Radträger (1) einen Schalenkörper (28) aus Blech mit einem Boden (29) und einer Seitenwand (30) umfasst, **dadurch gekennzeichnet, dass** zumindest ein Lenkeranschluss (7) eine in der Seitenwand (30) des Schalenkörpers (28) angeordnete Lageraufnahme (34) aufweist, in welcher ein Lager (10) gehalten ist und der an diesem Lenkeranschluss (7) befestigte Lenker (3) die Lageraufnahme (34) umgreift.

2. Radaufhängung nach Anspruch 1, **dadurch gekennzeichnet, dass** die Lageraufnahme (34) eine Hülse (35) ist.

3. Radaufhängung nach Anspruch 1, **dadurch gekennzeichnet, dass** die Lageraufnahme (34) durch einen in der Seitenwand (30) ausgebildeten Durchzug (54) gebildet ist.

4. Radaufhängung nach wenigstens einem der Ansprüche 1 bis 3, **dadurch gekennzeichnet, dass** der Lenkeranschluss (7) parallel zur Seitenwand (30) eine Stützwand (50) aufweist und die Lageraufnahme (34) mit einem Ende (52) in der Stützwand (50) gehalten ist.

5. Radaufhängung nach wenigstens einem der Ansprüche 1 bis 4, **dadurch gekennzeichnet, dass** der Schalenkörper (28) durch ein Deckelblech (33) bereichsweise verschlossen ist.

6. Radaufhängung nach Anspruch 5, **dadurch gekennzeichnet, dass** das Deckelblech (33) im Bereich der Lenkeranschlüsse (7, 8, 9) Aussparungen (44, 45) zur Durchführung von Enden (14, 15) oder endseitigen Schenkeln (38) der Lenker (3, 4, 5) aufweist.

7. Radaufhängung nach wenigstens einem der Ansprüche 1 bis 6, dadurch **gekenntzeichnet,** dass ein Gummilager (10) in der Lageraufnahme (34) aufgenommen ist.

8. Radaufhängung nach wenigstens einem der Ansprüche 1 bis 7, **dadurch gekennzeichnet, dass** zumindest ein weiterer Lenkeranschluss (8, 9) zwei von der Seitenwand (30) abstehende Schenkel (39,40; 42, 43) aufweist zwischen denen ein Ende (14, 15) eines an diesem Lenkeranschluss (8, 9) befestigten Lenkers (4, 5) mit einem Lager (11, 12) aufgenommen ist.

9. Radaufhängung nach wenigstens einem der Ansprüche 1 bis 8, **dadurch gekennzeichnet, dass** eine Radbefestigung (31) außenseitig am Boden (29) des Schalenkörpers (28) gefügt ist.

## Claims

1. Wheel suspension for a motor vehicle, having a wheel carrier (1) and a plurality of suspension arms (3, 4, 5) which are each connected to the wheel carrier (1) by way of a suspension arm connection (7, 8, 9), the wheel carrier (1) comprising a shell body (28) which is made of sheet metal and which has a base (29) and a side wall (30), **characterised in that** at least one suspension arm connection (7) has a bearing receptacle (34) which is arranged in the side wall (30) of the shell body (28) and in which a bearing (10) is held, and the suspension arm (3) attached to this suspension arm connection (7) engages around the bearing receptacle (34).

2. Wheel suspension according to claim 1, **characterised in that** the bearing receptacle (34) is a sleeve (35).

3. Wheel suspension according to claim 1, **characterised in that** the bearing receptacle (34) is formed by a rim hole (54) provided in the side wall (30).

4. Wheel suspension according to at least one of claims 1 to 3, **characterised in that** the suspension arm connection (7) has a support wall (50) parallel to the side wall (30), and the bearing receptacle (34) is held by one end (52) in the support wall (50).

5. Wheel suspension according to at least one of claims 1 to 4, **characterised in that** the shell body (28) is partially closed off by a cover plate (33).

6. Wheel suspension according to claim 5, **characterised in that** the cover plate (33) has, in the region of the suspension arm connections (7, 8, 9), recesses (44, 45) for the passage of ends (14, 15) or end members(38) of the suspension arms (3, 4, 5).

7. Wheel suspension according to at least one of claims 1 to 6, **characterised in that** a rubber bearing (10) is accommodated in the bearing receptacle (34).

8. Wheel suspension according to at least one of claims 1 to 7, **characterised in that** at least one further suspension arm connection (8, 9) has two members (39, 40; 42, 43) projecting from the side wall (30), between which an end (14, 15) of a suspension arm (4, 5) attached to this suspension arm connection (8, 9) is accommodated by a bearing (11, 12).

9. Wheel suspension according to at least one of claims 1 to 8, **characterised in that** a wheel attachment (31) is joined to the outside of the base (29) of the shell body (28).

## Revendications

1. Suspension de roue pour un véhicule automobile avec un support de roue (1) et avec plusieurs bras (3, 4, 5) qui sont reliés chacun par l'intermédiaire d'un raccord de bras (7, 8, 9) au support de roue (1), le support de roue (1) comprenant un corps de coque (28) en tôle avec un fond (29) et avec une paroi latérale (30), **caractérisée en ce qu'**au moins un raccord de bras (7) comporte un logement de palier (34) qui est agencé dans la paroi latérale (30) du corps de coque (28) et dans lequel un palier (10) est retenu et le bras (3) fixé à ce raccord de bras (7) entoure le logement de palier (34).

2. Suspension de roue selon la revendication 1, **caractérisée en ce que** le logement de palier (34) est un manchon (35).

3. Suspension de roue selon la revendication 1, **caractérisée en ce que** le logement de palier (34) est formé par un passage (54) conçu dans la paroi latérale (30).

4. Suspension de roue selon au moins l'une des revendications 1 à 3, **caractérisée en ce que** le raccord de bras (7) comporte parallèlement à la paroi latérale (30) une paroi de soutien (50) et **en ce que** le logement de palier (34) est tenu par une extrémité (52) dans la paroi de soutien (50).

5. Suspension de roue selon au moins l'une des revendications 1 à 4, **caractérisée en ce que** le corps de coque (28) est fermé par endroits par une tôle couvrante (33).

6. Suspension de roue selon la revendication 5, **caractérisée en ce que** la tôle couvrante (33) comporte dans la zone des raccords de bras (7, 8, 9) des évidements (44, 45) pour le passage d'extrémités (14, 15) ou de branches terminales (38) des bras (3, 4, 5).

7. Suspension de roue selon au moins l'une des revendications 1 à 6, **caractérisée en ce qu'**un palier en caoutchouc (10) est logé dans le logement de palier (34).

8. Suspension de roue selon au moins l'une des revendications 1 à 7, **caractérisée en ce qu'**au moins un autre raccord de bras (8, 9) comporte deux branches (39, 40; 42, 43) qui sont distantes de la paroi latérale (30) et entre lesquelles une extrémité (14, 15) d'un bras (4, 5) fixé à ce raccord de bras (8, 9) est logée avec un palier (11, 12).

9. Suspension de roue selon au moins l'une des revendications 1 à 8, **caractérisée en ce qu'**une fixation de roue (31) est assemblée côté extérieur au fond (29) du corps de coque (28).
